# EUROPEAN PATENT APPLICATION

(11) **EP 3 902 103 A1**
(43) Date of publication of application: **27.10.2021**
(21) Application number: 20170864.1
(22) Date of filing: 22.04.2020
(51) Int. Cl.: H02K 1/14, H02K 1/27, H02K 3/18, H02K 21/24, H02K 16/02

(54) **AN IMPROVED AXIAL FLUX ELECTRIC MOTOR**

(71) Applicant: VAM Innovation, 7490 Aulum (DK)
(72) Inventor: MALLE, Morten, 7490 Aulum (DK); VOICU, Marian, 7490 Aulum (DK); LAURIDSEN, Kurt Armose, 7490 Aulum (DK)
(74) Representative: Dragsted Partners A/S

(57) **Abstract**

An electric motor is provided. The electric motor comprises a plurality of field coil electromagnets arranged concentrically around a central axis of the electric motor, and at least one magnet arranged at each axial end of the plurality of field coil electromagnets..

## Description

### Technical Field

The present invention relates to an electric motor. In particular, the present invention relates to electric motors and generators and efficiency improvements thereof.

### Background

The use of electric motors, i.e. motors and generators, is vast. Ranging from small-scale applications to large industrial systems, electric motors are often a preferred choice when motion is required, and/or when motion is to be converted to electrical energy.

There are different types of electric motors, operating on DC or AC. In addition to this, a number of different electric motor types have been developed, such as brushed DC motors, brushless DC motors, permanent magnet DC motors, etc.

These known electric motors have efficiency characteristics which are highly dependent on the rotational speed of the electric motor. A typical example of performance characteristics for an electric motor is showing a rapid increase of efficiency in the beginning, reaching a maximum before decreasing at higher speed. Hence existing electric motors have a maximum efficiency point. While it is possible to design electric motor applications to operate at the maximum efficiency point of the electric motor, it is often desirable to have the electric motor operate in a speed range, rather than at a specific speed. For such cases, prior art electric motors will operate at a lower efficiency, and there is thus a need for improvements.

### Summary

It is accordingly an object of the invention to eliminate, alleviate, mitigate or reduce at least some of the problems referred to above, by providing an electrical motor of the axial flux type, of which the force is acting at an increased radius, thereby improving the mechanical work output.

According to a first aspect, an electrical motor is provided.

The above objects, together with numerous other objects, advantages and features, which will become evident from the below description, are accomplished by a solution in accordance with the present invention by an electric motor comprising a plurality of field coil electromagnets arranged concentrically around a central axis of the electric motor and at least one magnet arranged at each axial end of the plurality of field coil electromagnets, characterised in that each field coil electromagnet is circumferentially separated from its adjacent field coil electromagnets.

In accordance with the present disclosure, the term "central axis" may be understood as a longitudinal axis of a motor, where the central axis may be coaxial with a rotational axis of an electric motor. The term "axial" end may be seen as an end that extends in a direction that is parallel to the central axis of the electric motor. A radial direction may be seen as a direction that is orthogonal to the central axis of the electric motor, extending in a radial direction from the central axis. A circumferential direction may be seen as a direction that is along a circumferential axis which extends 360 degrees around the central axis of the electric motor. The circumferential direction may be defined as e.g. a degree or a radian, and a circumferential distance may e.g. be defined e.g. as a number of degrees or radians, as a part of a circumference.

In an embodiment, a first magnet (12) may be arranged at a first axial end and a second magnet arranged at the second axial end of each of the plurality of field coil electromagnets. Thus, for each of the field coil electromagnets, the motor has a first and a second magnet. This means that if the electric motor has four field coil electromagnets, it will have at least four first magnets and four second magnets positioned at an axial end of the field coil electromagnets.

In accordance with the present disclosure, a field coil electromagnet may be an assembly of two or more electromagnets arranged axially relative to each other, where the two or more electromagnet define the first axial end and the second axial end.

By distancing the field coil electromagnets in a circumferential direction from each other, it is possible to reduce the interference from one field coil electromagnets from another field coil electromagnet and thereby increase efficiency of the motor.

Moreover, each field coil electromagnet may have a circumferential width being greater than its radial thickness, and/or each magnet having a circumferential width being greater than its radial thickness.

Furthermore, each field coil electromagnet and/or magnet may have a radial extension from an inner radius to an outer radius, thereby defining a radial thickness, wherein the inner radius is greater than 25%, preferably greater than 50%, of the outer radius. Thus, in other words, the radial distance from the central axis towards the inner radius (inner periphery) of the field coil electromagnet in a radial direction, may be greater than 25% of the length from the central axis toward the outer radius (outer periphery), or may be greater than 50% of the length from the central axis toward the outer radius (outer periphery), or may be may be greater than 75% of the length from the central axis toward the outer radius (outer periphery). This may mean that the inner perifery of the field coil electromagnet may be positioned at a distance from the central axis, where the distance may be at least 25%, 50% and/or 75% of the radial distance to the outer perifery of the field coil magnet. Thus, at least 25% of the radial distance towards the outer perifery of the field coil magnet, will be void of the the field coil magnet. Thus, the magnet will only be positioned in a distance of 25-100% of the radial distance around the central axis, and the first 25% of the radial length will be void of field coil magnets.

This allows the magnetic flux to be focussed in a peripheral area of electrical motor, allowing the magnetic flux to be concentrated in an peripheral area, allowing the utilised magnetic flux to rotate the rotor at a longer lever arm, providing an increased torque using a same amount of magnetic force due to the increased lever arm of the rotor.
In addition, each field coil electromagnet may comprise a magnetic core and a winding surrounding said magnetic core.

Also, each magnetic core may comprise an elongated portion extending in the axial direction, and two transverse portions arranged at each axial end of the elongated portion.

Further, each transverse portion may be arc-shaped.

Additionally, the winding may be arranged around the elongated portion of the magnetic core.

Moreover, the circumferential extension of each field coil electromagnet may be in the range of 50-85°, and wherein the circumferential distance between two adjacent field coil electromagnets is in the range of 5-40°.

In addition, the plurality of field coil electromagnets may be mounted as a single field coil assembly.

Furthermore, the field coil assembly may further comprise a support body fixating the position of each field coil electromagnet, wherein the support body is formed by an insulating material.

Also, each one of said plurality of field coil electromagnets may form opposing poles spaced apart axially.

Further, each one of the at least one magnet(s) may be radially aligned with the plurality of field coil electromagnets and is arranged at an axial distance from the adjacent axial end of the plurality of field coil electromagnets.

Moreover, the at least one magnet(s) on each axial side of the field coil electromagnets may comprise a plurality of magnetic poles, wherein the number of poles of the at least one magnet equals the number of field coil electromagnets.

In addition, the at least one magnet(s) on each axial side of the field coil electromagnets may comprise a plurality of magnets arranged in a ring-shape facing the respective axial end of the plurality of field coil electromagnets.

Furthermore, the at least one magnet(s) on each axial side of the field coil electromagnets may further comprise a plurality of magnets arranged in a ring-shape and arranged radially outside an axial end of the plurality of field coil electromagnets.

Also, the plurality of magnets being arranged radially outside the axial end of the plurality of field coil electromagnets may comprise a plurality of magnetic poles, wherein the number of poles of the ring shape equals the number of field coil electromagnets.

Additionally, the at least one magnet on each axial side of the field coil electromagnets may further comprise a plurality of magnets arranged in a ring-shape and arranged radially inside an axial end of the plurality of field coil electromagnets.

Moreover, the plurality of magnets being arranged radially outside the axial end of the plurality of field coil electromagnets may comprise a plurality of magnetic poles, wherein the number of poles of the ring shape equals the number of field coil electromagnets.

In addition, the plurality of field coil electromagnets may form a stator assembly, and the at least one magnet on the respective axial sides of the field coil electromagnets may form a rotor assembly.

Finally, the plurality of field coil electromagnets may form a rotor assembly, and wherein the at least one magnet on the respective axial sides of the field coil electromagnets forms a stator assembly.

In accordance with the present disclosure, the term motor may relate to a device to convert electrical energy to kinetic energy, or vice versa in the form of a generator, where the kinetic energy is converted into electric energy. Thus, the term motor may be replaced with the term generator, when the input into the motor is kinetic energy to transform into electrical energy.

In an embodiment, the core of the field coil electromagnet is made of iron, alloys of iron and other materials or amorphous iron.

In an embodiment, the winding of the field coil electromagnet is made of copper or alloys of copper and other materials.

In an embodiment, the core of the field coil electromagnet extends radially 2-85% of the radial distance from the outer perimeter of the axel to the central point of the core of the field coil electromagnet, in other embodiments it may extend 3%-70% or 4%-55% or 5%-40%. In this way, it is achieved that a major part of the resulting force is generated at a distance more than 50% from the axle of the electrical motor. Hence, a large a torque is achieved.

In an embodiment, the magnet parts arranged radially respectively inside or outside, i.e. the lower and upper magnet parts of the core of the field coil magnets, are positioned at a distance closer to the windings of the field coil electromagnet than the most focussed point of flux dissipation from the core.

Other aspects of the invention and its embodiments are defined by the appended patent claims and are further explained in the detailed description section as well as on the drawings.

It should be emphasised that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise.

### Brief Description of the Drawings

Objects, features and advantages of embodiments of the invention will appear from the following detailed description, reference being made to the accompanying drawings, in which:
Fig. 1 is a schematic illustration of a non-limiting example of an electric motor;
Fig. 2 is a cross-sectional view of an electric motor according to an embodiment;
Fig. 3 is an isometric view of a field coil assembly forming part of an electric motor according to an embodiment;
Fig. 4 is an isometric view of a magnet configuration forming part of an electric motor according to an embodiment;
Fig. 5 is an isometric view of a field coil electromagnet forming part of an electric motor according to an embodiment;
Fig. 6 is an isometric view of a magnetic core of a field coil electromagnet forming part of an electric motor according to an embodiment;
Fig. 7 is an isometric view of a field coil electromagnet forming part of an electric motor according to an embodiment, using the magnetic core shown in Fig. 6;
Fig. 8 is an exploded view of an electric motor according to an embodiment;
Fig. 9 is an isometric view of an electric motor according to an embodiment;
Fig. 10 show consists of diagrams showing performance characteristics of the electric motor shown in Fig. 8.;
Figs. 11a-b show an electric motor not forming part of the invention and the resulting force vector,
Figs. 12a-b show an electric motor according to an embodiment of the invention and the resulting force vector; and
Figs. 13a-e show various embodiments of electric motors.

### Detailed Description

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

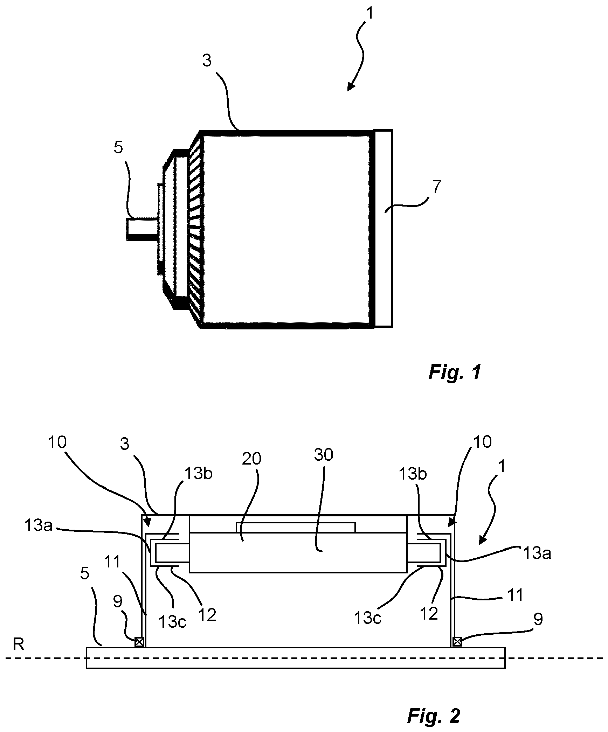

In Fig. 1, an electric motor 1 is shown schematically. The electric motor 1 has a stationary housing 3 enclosing various components and a rotating shaft 5 which is forced to rotate upon activation of the electric motor 1. The electric motor 1 also comprises power electronics 7 to provide the required power to drive the motor 1.

The electric motor 1 can be driven as a motor, whereby electrical power is transformed to mechanical power by rotation of the rotating shaft 5. The electric motor 1 may also be operated as a generator, receiving mechanical power by rotation of the rotating shaft 5 and transforming that rotation to electrical energy.

A cross-sectional view of an embodiment of the electric motor 1 is shown in Fig. 2; only one side of the rotational shaft 5 is shown. The electric motor 1 comprises a rotor assembly 10 and a stator assembly 20. The rotor assembly 10 is fixed to the rotating shaft 5 and is formed by discs 11 extending radially from the rotating shaft 5 on each axial side of the stator assembly 20. Each disc 11 is provided with at least one magnet 12 at its outer periphery. The at least one magnet 12 is formed by three parts 13a-c. A centre part 13a is arranged in parallel with the disc 11 at a certain distance from the axial end of the stator assembly. An upper part 13b is arranged radially outside the first and/or the second axial end of the stator assembly 20, and a lower part 13c is arranged radially inside the axial end of the stator assembly 20.

For proper operation of the electric motor, it is only necessary to have one of said parts 13a-c; hence in one embodiment the at least one magnet comprises only the centre part 13a, the upper part 13b, the lower part 13c, or any combination thereof.

The discs 11, including the magnets 12, are allowed to rotate relative the housing 3. For this, the rotating shaft 5 may be rotatably supported at the housing 3 by means of one or more bearings 9. As the discs 11 rotate, so will the rotating shaft 5 around its rotating axis R.

For each disc 11, the magnet 12 is divided into alternating poles in the circumferential direction. The magnets 12 are shifted, such that at each circumferential position, the magnet 12 on one axial side of the stator assembly 20 will have the opposite sign of the magnet 12 on the other axial side of the stator assembly 20.

The stator assembly 20 comprises a plurality of field coil electromagnets 30. The field coil electromagnets 30 are distributed at the outer radius of the electric motor 1 in a circumferential orientation, so that the field coil electromagnets 30 surround the rotating shaft 5. The stator assembly 20 is arranged between the magnets 12, so each magnet 12 will work with the magnetic field caused by the field coil electromagnets 30.

When powered, each field coil electromagnet 30 will generate opposing magnetic poles at its respective axial end. By alternating the poles of each field coil electromagnet 30, either by using brushes or by using brushless technologies, such as a H-bridge controller or similar, the stator assembly 20 will drive the rotor assembly 10 in a rotating manner.

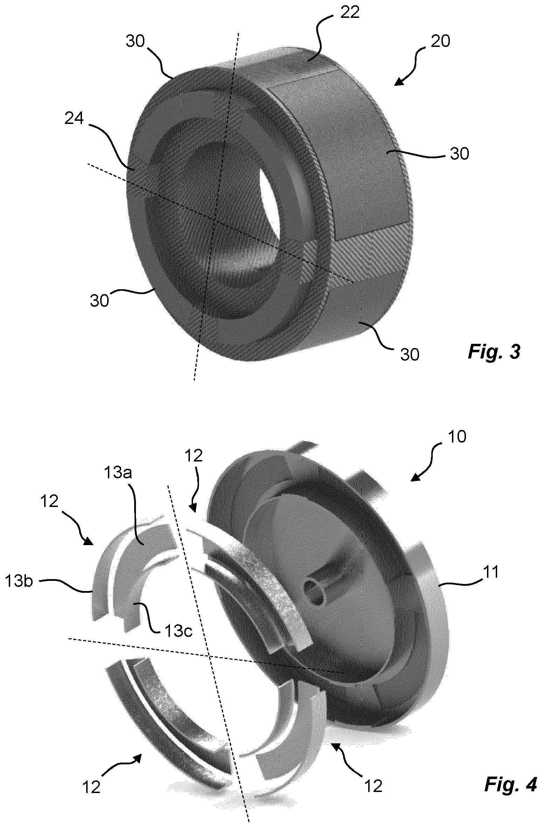

An embodiment of a stator assembly 20 is shown in Fig. 3. The stator assembly 20 forms a ring shape and comprises a plurality of field coil electromagnets 30. In the shown example, there are four field coil electromagnets 30, however, it should be understood that any suitable number of field coil electromagnets 30 is possible. The field coil electromagnets 30 are distributed evenly along the circumferential direction and arranged at a distance from each other. The field coils are not in conductive contact with each other. In the shown example, each field coil electromagnet 30 has a circumferential extension of approximately 70°, and a distance to its neighbouring field coil electromagnet by approximately 20°.

The stator assembly 20, in this embodiment forming a field coil assembly, comprises a support body 22 fixating the position of each field coil electromagnet 30. Hence, the field coil electromagnets 30 are embedded in the support body 22. The support body 22 is preferably formed by an insulating material so that there is no contact between the field coil electromagnets 30.

While the field coil assembly 20 forms a cylindrical body, each axial end is provided with an axial protrusion 24, which may be the first and/or the second axial end of the field coil assembly. This protrusion, comprising parts of the field coil electromagnets 30 as well as the embedding support body material, will be arranged close to the magnets 12 of the rotor assembly 10.

Details of an embodiment of a rotor assembly 10 are shown in Fig. 4. As explained earlier, the magnets 12 are arranged on the inner axial side of the discs 11. Hence, the components shown in Fig. 4 are preferably arranged on each axial side of the electric motor 1.

The magnet 12 is divided into a plurality of poles. In the shown example, there are four poles arranged in an alternating manner, so that the number of poles equals the number of field coil electromagnets 30 of the field coil assembly 20 shown in Fig. 3.

The circumferential extension of each magnet pole preferably corresponds to the circumferential extension of each field coil electromagnet 30, i.e. in the shown embodiment each magnet poles extends by approximately 70°, leaving a circumferential angular distance of approximately 20° to its neighbouring magnet pole.

The magnet 12 is radially aligned with the plurality of field coil electromagnets 30 and arranged at the adjacent axial end of the plurality of field coil electromagnets 30, i.e. at the axial protrusion 24 of the field coil assembly 20.

The magnet 12 is formed as a ring shape. In the shown example, each magnetic pole has the central part 13a, the upper part 13b, and the lower part 13c. However, as explained earlier only one of said parts 13a-c may be required. The magnet parts 13a-c have an equal circumferential extension. However, each part 13a-c of a specific magnetic pole may be divided into several segments, such that several adjacent segments form one magnetic part 13a-c.

The central magnet parts 13a are arranged in a ring-shape facing the respective axial end of the plurality of field coil electromagnets 30. The upper magnet parts 13b are arranged in a ring-shape arranged radially outside the axial end of the plurality of field coil electromagnets 30, and the lower magnet parts 13c are arranged in a ring-shape arranged radially inside the axial end of the plurality of field coil electromagnets 30.

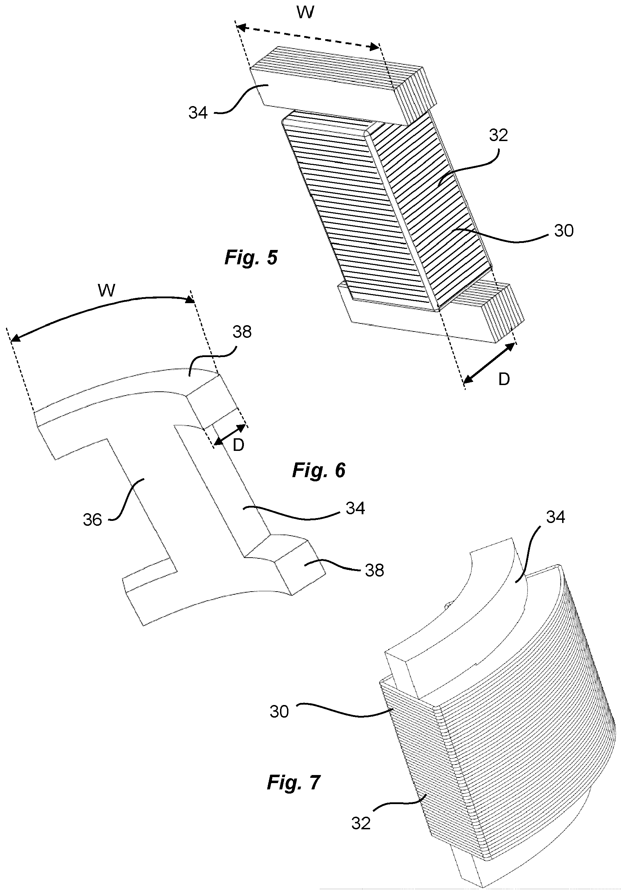

Two different configurations of a field coil electromagnet 30 for use with the electric motor 1 are shown in Figs. 5-7. Common for both embodiments is that i) they provide opposing poles at their respective axial end, and ii) the circumferential width W is greater than the radial thickness D.

In Fig. 5, a first example is shown, wherein the field coil electromagnet 30 is linear. The field coil electromagnet 30 comprises a winding 32, surrounding a magnetic core 34. The magnetic core 34 is in the shape of an H-bar. The H-bar may be formed as a monolithic body or a laminate of magnetic sheets. The field coil electromagnet 30 has a circumferential width W and a radial thickness D. The width W corresponds to the width of the magnetic core 34, while the thickness D corresponds to the thickness of the winding 32. As can be seen in Fig. 5, the width W is substantially greater than the thickness D. The ratio W/D may be in the range of 1.5-10, such as 2.5. The ratio of the width versus the thickness of the field coil electromagnet may assist in focussing the magnetic flux at a periphery of the rotor/stator, in order to increase efficiency and torque of the electric motor.

In Fig. 6, a magnetic core 34 according to another embodiment is shown. Here, the magnetic core 34 is curved to fit with the cylindrical geometry of the rotor assembly 10.

The magnetic core 34 comprises an elongated portion 36 extending in the axial direction and two transverse portions 38 arranged at each axial end of the elongated portion 36.

Each transverse portion 38 (first and/or second axial end of the field coil assembly) extends in the circumferential direction i.e. extends at least partially along a circular outline, and hence they are arc-shaped. The winding 32 is arranged around the elongated portion 36 of the magnetic core 34, as can be seen in Fig. 7.

As for the embodiment of Fig. 5, the field coil electromagnet 30 of Fig. 7 has a circumferential width W and a radial thickness D. The width W corresponds to the width of the magnetic core 34, while the thickness D corresponds to the thickness of the winding 32. As can be seen in Fig. 5, the width W is substantially greater than the thickness D. The ratio W/D may be in the range of 1.5-10, such as 2.5. For an electric motor 1 having a rotor diameter of 20 cm, the width W of a field coil electromagnet 30 may be n^{∗}20^{∗}70/360 = 12.2 cm, assuming that the circumferential extension of the field coil electromagnet is 70°. The thickness may for such embodiment be in the range of 2-8cm, depending on different material properties etc.

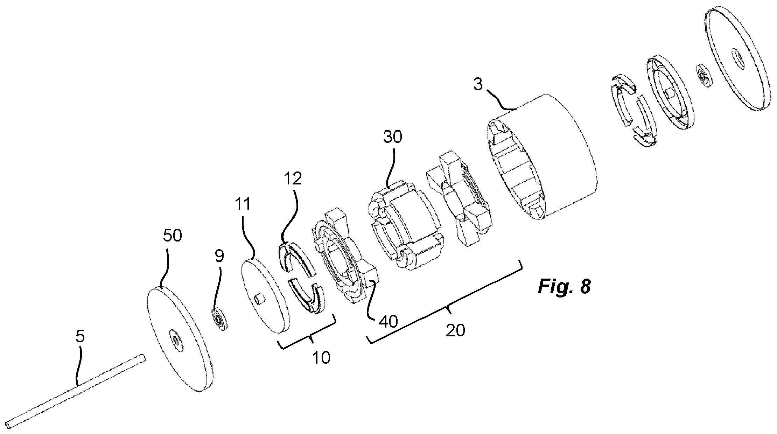

In Fig. 8, an example of an electric motor 1 is shown. Due to the axial symmetry, only elements on one axial side are provided with reference numerals.

The electrical motor 1 has the housing 3, which provides a secure fixation of the field coil assembly 20. The field coil assembly 20 comprises the field coil electromagnets 30, as well as a first and a second parts 40 which form the support body 22 of the field coil assembly 20 as explained earlier and may be positioned at opposing axial ends of the field coil electromagnets. The first and the second parts 40 are positioned so that they separate field coil electromagnets 30 in a circumferential direction and provide a spacing between the separated field coil electromagnets.

The rotor assembly 10 is shown on each axial side of the field coil assembly 20, including the discs 11 and the magnets 12. The axial ends of the electric motor 1 are terminated by end plates 50.

It should be understood that the end plates 50 and/or the housing 3 is provided with power connectors and/or power electronics to drive the electric motor 1 correctly.

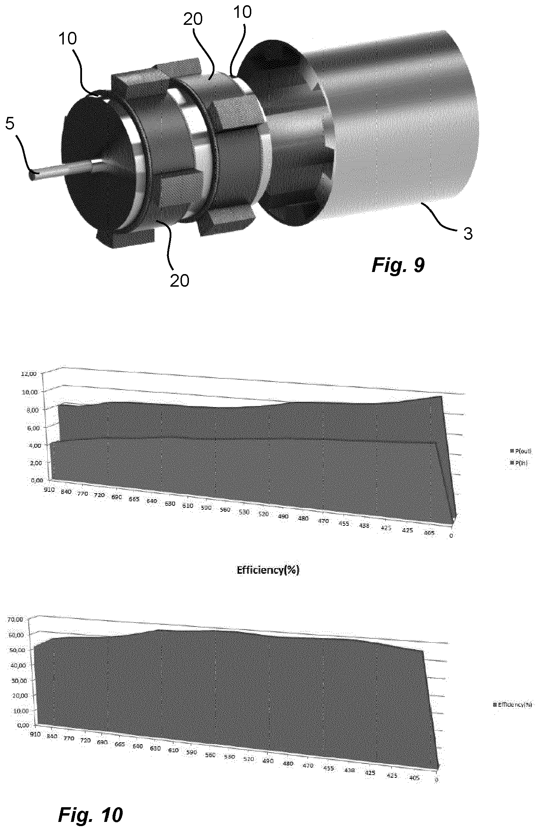

Another example of an electric motor 1 is shown in Fig. 9. Here, a dual stator arrangement is shown whereby two field coil assemblies 20 are arranged in series, axially aligned. The field coil assemblies 20 are phase shifted, such that there is a 50% overlap between the field coil electromagnets 30 of the two different field coil assemblies 20. Rotor assemblies 10 are arranged on each axial end of the dual stator arrangement.

Diagrams are shown in Fig. 10, visualising the efficiency of a prototype built according to the embodiment shown in Fig. 8. The efficiency may be tested as disclosed in the following example paragraph. In the upper diagram, the input power and the output power is shown in the vertical axis and are plotted for different RPM which is shown in the horizontal axis, and the resulting efficiency profile, where the efficiency in percentages is shown in the vertical axis and RPM is shown in the horizontal axis is plotted in the bottom diagram. As can be seen, the efficiency remains above 50% for all RPMs; it should however be noted that significant improvements of efficiency can be made by optimising materials, bearings, dimensions, etc. It is shown that the high efficiency curve is a very flat curve having very low peaks compared to the prior art.

Tests made so far show the same pattern of high level of efficiency on very wide RPM interval. As can be seen, in the diagrams, also the power input and power output have very different tendency compared to prior art motors.

One major advantage of the embodiments described herein is the fact that because of the different configuration and positioning of the field coil electromagnets 30, the electromagnetic flux will be concentrated. By configuring the magnet core 34 to have an elongated shape tangent to the rotational direction on a comparatively long (in the circumferential direction) and narrow (in the radial direction) path at the outer radius of the rotor, the mechanical effect is much higher at lower power input.

For all embodiments, increasing the diameter of the electric motor will decrease the motor speed (RPM). However, as the RPM is reduced at the same power input, the output torque will be proportionally higher. Because of the comparatively narrow band of magnetic fields, the resulting force will act on an increased radius, resulting in a more constant efficiency.

Further, by maintaining the area producing work at a different diameter but keeping the width of the segment almost the same, the efficiency will not be affected.

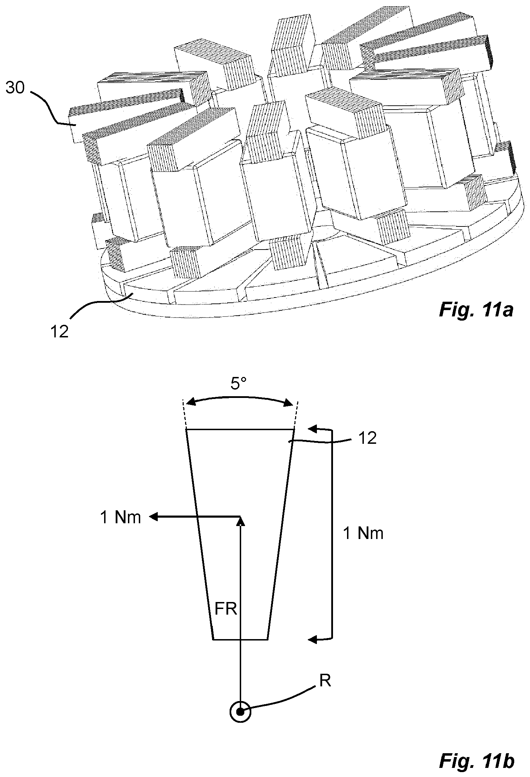

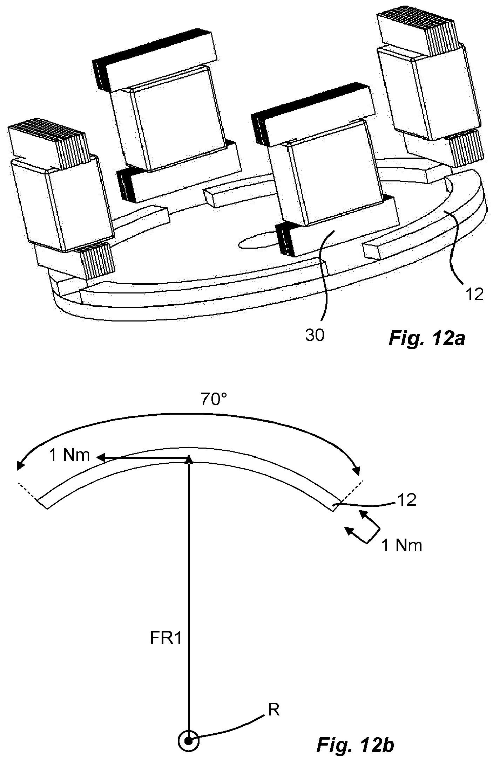

To further understand the technical advantages of the embodiments described herein, in particular related to the fact that each field coil electromagnet has a circumferential width W being greater than its radial thickness D, reference is made to Figs. 11a-b and 12a-b.

In Fig. 11, an example of a single-side electric motor is shown. The stator assembly is formed by a plurality of field coil electromagnets 30, and the rotor assembly is formed by a plurality of alternating pole magnets 12.

In an axial configuration according to Fig. 11a, the aim is to maximise the interacting surface between the magnets 12 and the axial end (i.e. the magnetic pole) of the field coil electromagnets. As the interacting surface increases, so does the output torque of the electric motor. However, as shown in Fig. 11b, the resulting force vector RF acts on a centre radius rather than on an outer radius. This will result in a lower efficiency. This is because the interaction surface being close to the centre axis R is producing low mechanical force, while high power input is required.

As the magnetic interaction occurs closer to the centre of the rotor, the mechanical output is reduced.

As is clear from Fig. 11a, the interaction surface between the field coil electromagnets 30 and the permanent magnets 12 extend from the outer radius of the rotor to inner radius of the rotor.

At the same time, induction effect (BEMF) is also a supplementary effect reducing the efficiency of the electric motor.

The electric motor shown in Figs. 11a-b thus aims at an objective to maximise the mechanical output without considering the efficiency of the device as main target.

Now turning to Figs. 12a-b, the orientation of the field coil electromagnets 30 is rotated by 90° (thereby requiring a less number of field coil electromagnets 30), and the permanent magnets 12 of the rotor are reshaped to match the position of the axial ends (i.e. the poles) of the field coil electromagnets 30.

For this embodiment, which is valid for all embodiments of the invention described herein, a main target is to improve the efficiency of the electric motor.

Having the same interaction surface between each field coil electromagnet 30 and the magnet 12, but placed at the maximum radius possible, it is possible to extract maximum mechanical work at minimum power input.

This is to be compared with the electric motor of Figs. 11a-b, wherein the interaction surface between each field coil electromagnet 30 and the magnet 12 is placed at the minimum circumferential distance, utilising the maximum radial extension.

By analysing a single field coil electromagnet at a time, in this configuration, at a similar power input, the interaction surface between a field coil electromagnet 30 and a magnet 12 is only at the outer radius of the rotor. The resulting force vector RF1 is acting on the outer radius rather than on a centre radius. Hence, at a similar power input, this configuration is producing more mechanical power output compared to the electric motor of Figs. 11a-b.

This is also the main reason why this configuration is capable of producing and maintaining high efficiency at high speed and low speed.

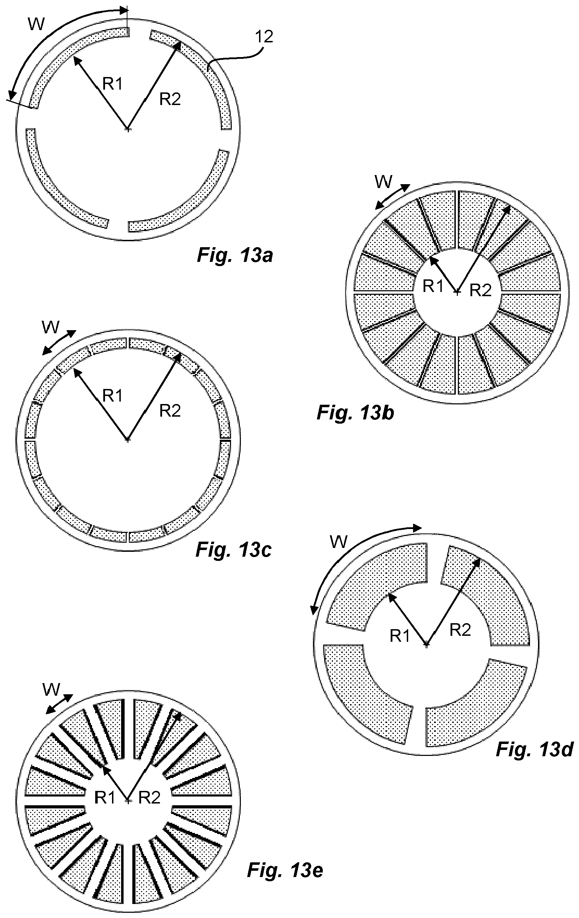

Now turning to Figs. 13a-e, where some different embodiments are shown. In these drawings, the rotor is shown, i.e. the distribution of the magnets 12. However, these drawings also indicate possible distributions of the field coil electromagnets 30, which has a shape and distribution pattern being equal to what is shown in Figs. 13a-e. Hence, in one embodiment the end view of the rotor as shown in Figs. 13a-e would be equal to an end view of the stator, i.e. the field coil electromagnets 30, which would then exhibit the same dimensions as the shown magnets 12.

In Figs. 13a-e, the radial thickness is defined as R2-R1, while the circumferential width W is indicated as the length of the magnet/field coil electromagnet at its outer radius R2.

In Fig. 13a, the radial thickness is comparatively thin, and the circumferential width is much greater than the radial thickness. This also applies for the embodiment of Fig. 13c, although the circumferential width W is reduced as there is a greater number of poles/magnets/field coil electromagnets.

In Fig. 13b, the number of poles/magnets/field coil electromagnets is the same as in Fig. 13c, however the radial thickness is increased.

In Fig. 13e, the number of poles/magnets/field coil electromagnets is the same as in Figs. 13b-c, however, there is an increased circumferential distance between the poles/magnets/field coil electromagnets.

Finally, in Fig. 13d the poles/magnets/field coil electromagnets are similar to the embodiment of Fig. 13a, however the radial thickness is increased.

The invention has been described above in detail with reference to embodiments thereof. However, as is readily understood by those skilled in the art, other embodiments are equally possible within the scope of the present invention, as defined by the appended claims.

### Example

| **Mass(kg)** | **arm (m)** | **Torque (Nm)** | **Torque(mNm)** | **RPM** | **Volt(input)** | **Amp (input - A)** | **Power (input-W)** | **Efficiency (%)** |
|---|---|---|---|---|---|---|---|---|
| 0,009 | 0,175 | 0,015435 | 15,435 | 2120 | 15 | 0,6 | 9 | 38,07 |
| 0,014 | 0,175 | 0,02401 | 24,01 | 1650 | 15 | 0,6 | 9 | 46,09 |
| 0,02 | 0,175 | 0,0343 | 34,3 | 1380 | 15 | 0,6 | 9 | 55,07 |
| 0,023 | 0,175 | 0,039445 | 39,445 | 1220 | 15 | 0,6 | 9 | 55,99 |
| 0,026 | 0,175 | 0,04459 | 44,59 | 1140 | 15 | 0,6 | 9 | 59,14 |
| 0,028 | 0,175 | 0,04802 | 48,02 | 1100 | 15 | 0,6 | 9 | 61,46 |
| 0,03 | 0,175 | 0,05145 | 51,45 | 1060 | 15 | 0,6 | 9 | 63,45 |
| 0,032 | 0,175 | 0,05488 | 54,88 | 1020 | 15 | 0,6 | 9 | 65,13 |
| 0,037 | 0,175 | 0,063455 | 63,455 | 960 | 15 | 0,605 | 9,075 | 70,29 |
| 0,04 | 0,175 | 0,0686 | 68,6 | 930 | 15 | 0,61 | 9,15 | 73,01 |
| 0,045 | 0,175 | 0,077175 | 77,175 | 870 | 15 | 0,62 | 9,3 | 75,6 |
| 0,047 | 0,175 | 0,080605 | 80,605 | 840 | 15 | 0,63 | 9,45 | 75,03 |
| 0,052 | 0,175 | 0,08918 | 89,18 | 790 | 15 | 0,65 | 9,75 | 75,67 |
| 0,055 | 0,175 | 0,094325 | 94,325 | 768 | 15 | 0,66 | 9,9 | 76,62 |
| 0,058 | 0,175 | 0,09947 | 99,47 | 745 | 15 | 0,68 | 10,2 | 76,08 |
| 0,064 | 0,175 | 0,10976 | 109,76 | 680 | 15 | 0,69 | 10,35 | 75,51 |
| 0,066 | 0,175 | 0,11319 | 113,19 | 670 | 15 | 0,7 | 10,5 | 75,63 |
| 0,07 | 0,175 | 0,12005 | 120,05 | 650 | 15 | 0,7 | 10,5 | 77,82 |
| 0,073 | 0,175 | 0,125195 | 125,195 | 645 | 15 | 0,7 | 10,5 | 80,53 |
| 0,105 | 0,175 | 0,180075 | 180,075 | 480 | 15 | 0,81 | 12,15 | 74,5 |
| 0,132 | 0,175 | 0,22638 | 226,38 | 378 | 15 | 1 | 15 | 59,74 |
| 0,162 | 0,175 | 0,27783 | 277,83 | 307 | 15 | 1,18 | 17,7 | 50,46 |

A setup for testing the efficiency

The table above shows experimental data, where torque is applied to the rotational axis of an experimental electrical motor in accordance with the description, and where the input power and the output torque are measured at a plurality of revolutions per minute (RPM). The variables in the table are:
Arm: length of arm from rotational axis of motor towards the free end of the arm,
Mass: measured mass applied to a scale by the free end of the arm,
torque calculated torque value applied to the rotational axis of the motor (mass^{∗}length of arm^{∗}gravity),
RPM: measured RPM of motor
Volt Input: measured input voltage of motor
AMP input: measured input current of motor
Power (calculated power input)
Efficiency: (torque^{∗}RPM/60^{∗}2π/Power input^{∗}100)[torque^{∗}RPM/60^{∗}2π = power output]

An example graph of an exemplary output is shown in Fig. 10.

The rotational axis of the motor is attached to an arm, where the arm extends in a radial direction from the rotational axis, and the arm is provided with a breaking force to apply a frictional connection with a rotary disk which is fixed to the rotational axis of the motor, allowing the arm to apply a force to a scale at its free end.

This example shows that the power efficiency of the exemplary motor is relatively high, ranging from 38% to 80% in a rudimentary experimental setup.

## Claims

1. An electric motor comprising a plurality of field coil electromagnets (30) each having a first axial end and a second axial end, the plurality of field coil magnets arranged concentrically around a central axis (R) of the electric motor and at least a first magnet (12) configured to be arranged at a first axial end and a second magnet configured to be arranged at the second axial end of the plurality of field coil electromagnets (30), **characterised in that** each field coil electromagnet (30) is separated in a circumferential direction from its adjacent field coil electromagnets (30).

2. The electric motor according to claim 1, wherein each field coil electromagnet (30) has a circumferential width (W) being greater than its radial thickness (D), and/or each magnet (12) has a circumferential width being greater than its radial thickness.

3. The electric motor according to claim 1 or 2, wherein each field coil electromagnet (30) and/or magnet (12) has a radial extension from an inner radius (R1) to an outer radius (R2), thereby defining a radial thickness (D), wherein the inner radius (R1) is greater than 25%, preferably greater than 50%, of the outer radius (R2).

4. The electric motor according to any of the preceding claims, wherein each field coil electromagnet (30) comprises a magnetic core (34) and a winding (32) surrounding said magnetic core (34).

5. The electric motor according to claim 4, wherein each magnetic core (34) comprises an elongated portion (36) extending in the axial direction, and two transverse portions (38) arranged at each axial end of the elongated portion (36).

6. The electric motor according to claim 5, wherein each transverse portion (38) is arc-shaped.

7. The electric motor according to claim 6, wherein the winding (32) is arranged around the elongated portion (36) of the magnetic core (34).

8. The electric motor according to any of the preceding claims, wherein the circumferential extension of each field coil electromagnet is in the range of 50-85°, and wherein the circumferential distance between two adjacent field coil electromagnets (30) is in the range of 5-40°.

9. The electric motor according to any of the preceding claims, wherein the plurality of field coil electromagnets (30) are mounted as a single field coil assembly (20).

10. The electric motor according to claim 9, wherein the field coil assembly (20) further comprises a support body (22) fixating the position of each field coil electromagnet (30), wherein the support body (22) is formed by an insulating material.

11. The electric motor according to any of the preceding claims, wherein each one of said plurality of field coil electromagnets (30) forms opposing poles spaced apart axially.

12. The electric motor according to any of the preceding claims, wherein each one of the at least one magnet(s) (12) is radially aligned with the plurality of field coil electromagnets (30) and is arranged at an axial distance from the adjacent axial end of the plurality of field coil electromagnets (30).

13. The electric motor according to any of the preceding claims, wherein the at least one magnet(s) (12) on each axial side of the field coil electromagnets (30) comprises a plurality of magnetic poles, wherein the number of poles of the at least one magnet equals the number of field coil electromagnets (30).

14. The electric motor according to any of the preceding claims, wherein the at least one magnet(s) (12) on each axial side of the field coil electromagnets (30) comprises a plurality of magnets (13a) arranged in a ring-shape facing the respective axial end of the plurality of field coil electromagnets (30).

15. The electric motor according to any of the preceding claims, wherein the at least one magnet(s) (12) on each axial side of the field coil electromagnets (30) further comprises a plurality of magnets (13b) arranged in a ring-shape and arranged radially outside an axial end of the plurality of field coil electromagnets (30).

16. The electric motor according to claim 15, wherein the plurality of magnets (13b) being arranged radially outside the axial end of the plurality of field coil electromagnets (30) comprises a plurality of magnetic poles, wherein the number of poles of the ring shape equals the number of field coil electromagnets (30).

17. The electric motor according to any of the preceding claims, wherein the at least one magnet (12) on each axial side of the field coil electromagnets (30) further comprises a plurality of magnets (13c) arranged in a ring-shape and arranged radially inside an axial end of the plurality of field coil electromagnets (30).

18. The electric motor according to claim 17, wherein the plurality of magnets (13c) being arranged radially outside the axial end of the plurality of field coil electromagnets (30) comprises a plurality of magnetic poles, wherein the number of poles of the ring shape equals the number of field coil electromagnets (30).

19. The electric motor according to any of the preceding claims, wherein the plurality of field coil electromagnets (30) forms a stator assembly, and wherein the at least one magnet (12) on the respective axial sides of the field coil electromagnets (30) forms a rotor assembly.

20. The electric motor according to any of the preceding claims, wherein the plurality of field coil electromagnets (30) forms a rotor assembly, and wherein the at least one magnet (12) on the respective axial sides of the field coil electromagnets (30) forms a stator assembly.
